# FASCICULE DE BREVET EUROPEEN

(11) **EP 1 323 466 B1**
(45) Date de publication et mention de la délivrance du brevet: **28.09.2011**
(21) Numéro de dépôt: 02293241.2
(22) Date de dépôt: 24.12.2002
(51) Int. Cl.: B01J 19/00

(54) **Procédé de dépôt sélectif de matière sur des électrodes de biocapteurs ou de puces réalisés à partir d'un même substrat**
Verfahren zur selektiven Ablagerung an Elektroden von Biosensoren oder Chips aus einem gemeinsamen Substrat
Process for selective material deposition at electrodes of biosensors or chips made from the same substrate

(30) Priorité: 27.12.2001 FR 0116922
(43) Date de publication de la demande: 02.07.2003
(73) Titulaire: Commissariat à l'Énergie Atomique et aux Énergies Alternatives, 75015 Paris (FR); Apibio, 69260 Marcy l'Etoile (FR)
(72) Inventeur: Jaffard, Claudine, 38120 Saint-Egreve (FR); Belleville, Marc, 38120 Saint-Egreve (FR); Bour, Catherine, 38120 Le Fontanil (FR)
(74) Mandataire: Simonnet, Christine

(56) Documents cités:
- WO-A-98/01221
- FR-A- 2 741 476
- US-B1- 6 251 595

## Description

### DOMAINE TECHNIQUE

L'invention se rapporte à un procédé de dépôt sélectif de matière sur des électrodes de biocapteurs ou de puces réalisés à partir d'un même substrat. Elle concerne en particulier des dispositifs de micro-électronique comportant plusieurs éléments interconnectés sur une même plaquette de départ ou substrat.

L'invention trouve des applications notamment pour la réalisation de micro-systèmes qui, dans le domaine de l'analyse biologique ou biochimique ou plus généralement des tests en pharmacologie, permettent l'analyse d'un très grand nombre de points par des procédés de fixation collectifs de réactifs sur un plan multizone. Ces micro-systèmes peuvent être réalisés par des "biochips" qui sont des puces comportant une partie de circuit électrique réalisée sur un substrat (un champ d'électrodes par exemple) et une partie biologique réalisée à la surface des puces.

### ETAT DE LA TECHNIQUE ANTERIEURE

L'une des techniques utilisées pour fixer ces réactifs est l'électrodéposition sur sites polarisés électriquement d'un polymère conducteur porteur de l'espèce chimique ou biologique choisie comme réactif. Le substrat est relié électriquement vers l'extérieur et est trempé dans une cuve contenant une solution porteuse de l'espèce chimique ou biologique à déposer. Le site choisi est polarisé et la copolymérisation s'effectue. On passe ensuite à une autre solution porteuse d'un autre réactif. Un autre site est polarisé pour une nouvelle copolymérisation. Le cycle reprend autant de fois qu'il y a de réactifs différents à fixer.

Une amélioration intéressante consiste à intégrer l'électronique d'adressage des sites dans le substrat lui-même. Cette technique est séquentielle. Chaque site est polarisé successivement et le substrat est trempé dans la solution porteuse du réactif à chaque passe.

L'une des principales limitations de ce procédé vient du temps nécessaire à la fonctionnalisation de milliers de puces traitées individuellement. Le document FR-A-2 741 476 (correspondant au brevet américain 5 776 791) divulgue l'application du procédé à une plaquette (ou substrat) destinée à fournir une pluralité de puces, ce qui est déjà un très grand progrès pour le temps de fonctionnalisation des sites. Ainsi, il est possible de traiter simultanément, sur une même plaquette semiconductrice, un grand nombre de puces pour déposer sélectivement une espèce chimique sur des électrodes déterminées de chaque puce, toutes les puces d'une plaquette étant alors traitées en parallèle.

Le traitement d'une plaquette, pour obtenir une pluralité de puces, peut faire intervenir différentes techniques. Par exemple, les puces peuvent être réalisées suivant un procédé de photorépétition, puis l'assemblage peut être réalisé suivant un procédé pleine tranche. Il est possible également de tout réaliser par un procédé en pleine tranche.

Cependant, quel que soit le procédé utilisé, les puces résultantes sont absolument identiques. Il se pose alors le problème de l'obtention de puces différentes entre elles sur une même plaquette, sans modification du procédé de réalisation, voir le brevet US 6 251 595. Il serait en effet très intéressant d'obtenir en fin de procédé des puces fonctionnalisées différentes mais obtenues par un procédé de réalisation et de fonctionnalisation collectif.

### EXPOSÉ DE L'INVENTION

La présente invention permet de remédier à ces inconvénients.

Elle a pour objet un procédé de dépôt sélectif de matière sur des électrodes de biocapteurs ou de puces réalisés à partir d'un même substrat, comme mentionné dans la revendication 1.

Les moyens de liaisons électriques du substrat permettant de connecter les plots d'adresse peuvent comprendre des répéteurs.

La matière déposée peut être constituée d'espèces chimiques, biochimiques ou biologiques.

### BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 montre un certain nombre de puces réalisées sur un substrat semiconducteur conformément à l'invention,
- la figure 2 illustre l'opération de programmation d'une puce à une adresse donnée par la méthode de connexion directe,
- la figure 3 illustre l'opération de programmation d'un biocapteur ou d'une puce à une adresse donnée par la méthode par comparaison.

### DESCRIPTION DETAILLEE DE MODES DE REALISATION DE L'INVENTION

L'invention permet l'adressage individuel de chacun des biocapteurs ou des puces réalisés sur une plaquette semiconductrice afin d'obtenir une plus grande souplesse d'utilisation lors de la fonctionnalisation, allant du traitement de tous les biocapteurs ou de toutes les puces de la plaquette en parallèle au traitement individuel de chaque biocapteur ou de chaque puce. Plus précisément, l'invention consiste à utiliser le principe du dépôt électrochimique à l'échelle de la plaquette, avec adressage individuel de chacun des biocapteurs ou de chacune des puces de la plaquette par programmation de l'adresse de chaque biocapteur ou de chaque puce et décodage des adresses à l'intérieur du mot de commande transmis en parallèle sur tous les biocapteurs ou sur toutes les puces de la plaquette.

La programmation de l'adresse peut aussi être réalisée en plusieurs niveaux. Dans le cas où les biocapteurs ou les puces sont assemblés dans un champ de photorépétition, il est possible d'avoir une programmation à l'intérieur du champ, par des niveaux classiques, des bits de poids faibles de l'adresse et programmation des bits de poids forts au niveau de la plaquette en niveau pleine tranche. Il est possible aussi de programmer tous les bits d'adresse en un seul niveau pleine tranche par le dernier niveau de métallisation pleine tranche par exemple. Un seul niveau suffit alors à programmer l'adresse du biocapteur ou de la puce et cette programmation peut être lisible visuellement à la manière d'un code barre, sur le biocapteur ou sur la puce fonctionnalisée.

Lors de la fonctionnalisation, chaque biocapteur ou chaque puce peut être activé individuellement et demeurer actif pendant l'activation d'autres biocapteurs ou d'autres puces. Ensuite, à l'intérieur de chaque biocapteur ou puce activé, chacune des électrodes peut être individuellement connectée à la source extérieure (potentiostat) et donc être déterminée comme site d'accrochage du réactif.

Le traitement d'un substrat pour y former des biocapteurs ou des puces, incluant leur adressage, est identique au traitement divulgué dans le document FR-A-2 741 476 cité plus haut, la programmation étant réalisée lors de la formation du réseau de biocapteurs ou de puces. On réalise d'abord sur un substrat un ou plusieurs ensembles de biocapteurs ou de puces identiques, comportant chacun ou chacune une pluralité d'électrodes et ayant des plots d'adresses non connectés. Cette réalisation est faite suivant n'importe quel procédé classique de fabrication de dispositifs de micro-électronique. On forme ensuite un réseau électrique connectant tous les biocapteurs ou toutes les puces ensemble soit directement, soit à travers un circuit répéteur. Dans le même niveau, chaque bit d'adresse est connecté pour chaque biocapteur ou puce selon un code constituant la programmation de l'adresse du biocapteur ou de la puce. Le circuit répéteur est un circuit supplémentaire qui permet la redistribution des commandes distribuées sur tous les biocapteurs ou sur toutes les puces et la concentration d'une sortie par biocapteur ou par puce en une seule sortie commune. Dans le cas d'une réalisation des biocapteurs ou des puces par photorépétition, il est possible de prévoir un répéteur par champ de photorépétition.

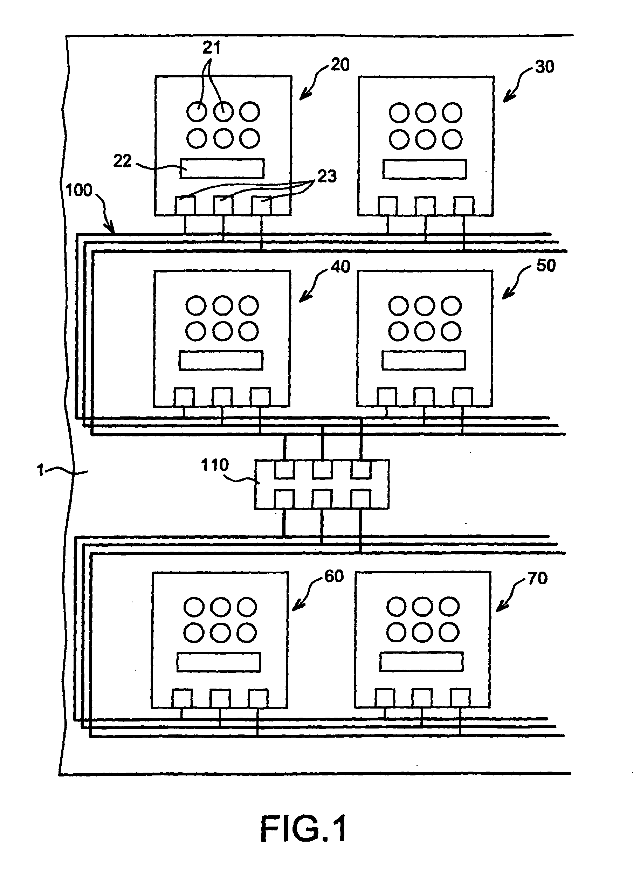

La figure 1 montre une partie d'un substrat semiconducteur 1 sur lequel quelques biocapteurs ou puces 20, 30, 40, 50, 60 et 70 sont visibles. Chaque biocapteur ou puce est équipé d'une pluralité d'électrodes, par exemple les électrodes 21 pour le biocapteur ou la puce 20. Chaque biocapteur ou puce est pourvu d'une zone d'adresse, par exemple la zone d'adresse 22 pour le biocapteur ou pour la puce 20, contenant l'adresse programmée du biocapteur ou de la puce. Chaque biocapteur ou chaque puce est aussi pourvu de plots d'interconnexions, par exemple les plots d'interconnexions 23 pour le biocapteur ou la puce 20.

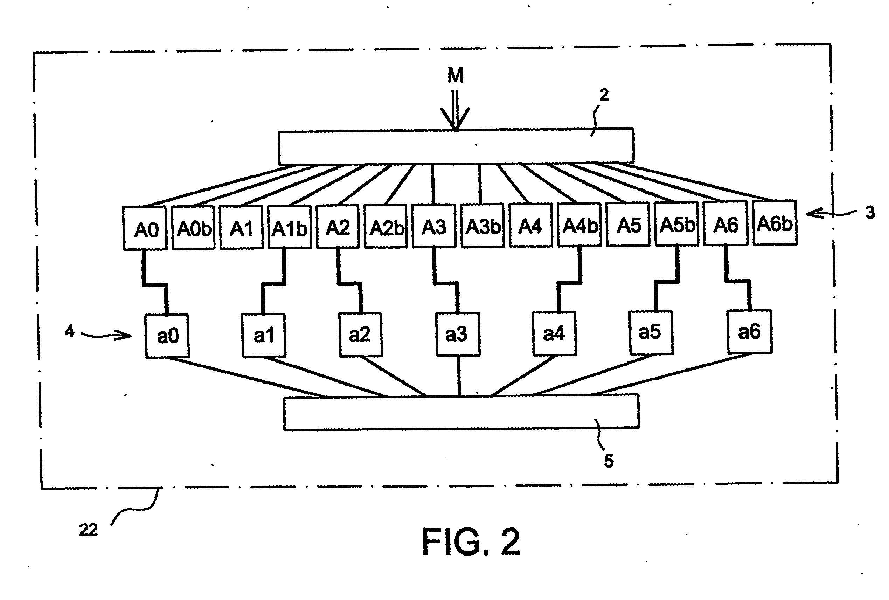

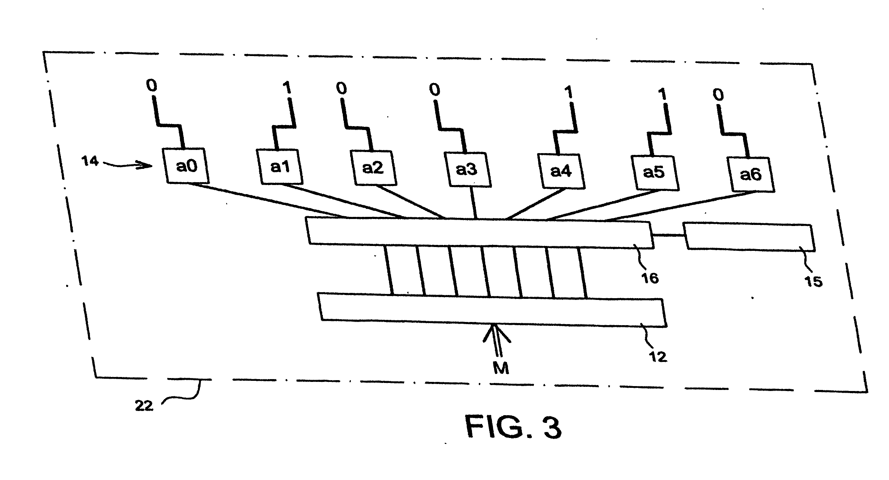

Des réalisations différentes de la zone d'adresse 22 sont illustrées à titre d'exemple par les figures 2 et 3.

Sous la référence 100, on a représenté les connexions électriques permettant de connecter les entrées communes à tous les biocapteurs ou à toutes les puces en parallèle. Un répéteur 110 a également été représenté. Par souci de simplification, les connexions électriques internes à chaque biocapteur ou puce n'ont pas été représentées.

La fonctionnalisation des biocapteurs ou des puces peut utiliser n'importe quel procédé d'électrodéposition.

L'adressage des biocapteurs ou des puces et des électrodes à greffer se fait de la manière suivante. Lors de la fonctionnalisation, on envoie sur tous les biocapteurs ou sur toutes les puces d'une plaquette une commande d'activation contenant l'adresse du biocapteur ou de la puce choisi. Le décodage des mots de commande se fait au niveau de chaque biocapteur ou de chaque puce, chaque biocapteur ou chaque puce ne reconnaissant que sa propre adresse et mémorise son état activé. On active ainsi le nombre de biocapteurs ou de puces désiré. On procède ensuite à la connexion des électrodes à greffer sur tous les biocapteurs ou sur toutes les puces activés, par adressage de chaque électrode visée.

On effectue ensuite l'opération d'électrodéposition sur les électrodes connectées des biocapteurs ou des puces activés, par une méthode de l'art connu.

L'adresse du biocapteur ou de la puce à activer est contenue dans la commande d'activation. Cette commande est envoyée à l'ensemble des biocapteurs ou des puces de la plaquette et l'adresse est décodée par chacun des biocapteurs ou chacune des puces. Le nombre de bits nécessaire à l'adressage d'un biocapteur ou d'une puce dans toutes la plaquette dépend de la taille du biocapteur ou de la puce et de la plaquette utilisée. Par exemple, 7 bits d'adresse permettent d'adresser 128 biocapteurs ou puces.

Plusieurs techniques sont utilisables pour la programmation de l'adresse d'un biocapteur ou d'une puce.

La figure 2 illustre l'opération de programmation d'un biocapteur ou d'une puce à une adresse donnée par la méthode de connexion directe. Le circuit de décodage 2 reçoit en entrée un mot de commande M et délivre en sortie l'adresse décodée sur des plots 3 (de A0 à A6b). Chacun des plots d'adresse 4 du biocapteur ou de la puce (de a0 à a6) est connecté au plot correspondant dans les adresses décodées ou à son complément. Les plots 4 fournissent alors (dans le cas de la figure 2) l'adresse 0100110 au circuit d'utilisation 5.

La figure 3 illustre l'opération de programmation d'un biocapteur ou d'une puce à une adresse donnée par la méthode par comparaison. Le circuit de décodage 12 reçoit en entrée un mot de commande M et délivre en sortie l'adresse décodée à des premières entrées d'un circuit de comparaison 16. Chacun des plots d'adresse 14 du biocapteur ou de la puce (de a0 à a6) est connecté à des secondes entrées du circuit de comparaison 16. Les plots d'adresse 14 sont à un potentiel haut ou bas selon le codage. Dans le cas de la figure 3, le biocapteur ou la puce est programmé à l'adresse 0100110. L'adresse du biocapteur ou de la puce est comparée à l'adresse décodée dans le mot de commande. La sortie du circuit de comparaison 16 est branchée au circuit d'utilisation 15.

Tout en permettant un gain de temps important par la parallélisation de la fonctionnalisation des électrodes en pleine tranche, l'invention laisse la possibilité de limiter à volonté le nombre de biocapteurs ou de puces activés à chaque passage. Ceci procure une souplesse extrême quant à la configuration finale des différents sites de la plaquette.

Selon l'utilisation, un biocapteur ou une puce seul peut être adressé et activé pour la connexion de ses électrodes. De même, un certain nombre de biocapteurs ou de puces peuvent être activés l'un ou l'une après l'autre, voire tous les biocapteurs ou toutes les puces du substrat et l'opération d'électrodéposition peut être réalisée sur tous les biocapteurs ou sur toutes les puces activés.

L'invention autorise toutes les configurations possibles, entre une parallélisation complète pour un traitement de tous les biocapteurs ou de toutes les puces du substrat et un traitement individuel de chaque biocapteur ou de chaque puce.

## Revendications

1. Procédé de dépôt sélectif de matière sur des électrodes (21) de biocapteurs ou de puces (20) réalisés à partir d'un même substrat (1), comprenant les étapes de :
a) Réalisation sur ledit substrat (1) d'une pluralité de biocapteurs ou de puces (20, 30, 40, 50, 60, 70), chaque biocapteur ou chaque puce comprenant une pluralité d'électrodes (21) sur lesquelles des dépôts sélectifs de matière doivent être réalisés, des plots d'interconnexions (23), une zone d'adresse (22) contenant l'adresse programmée du biocapteur ou de la puce, connectée aux plots d'interconnexions et apte à reconnaître l'adresse dudit biocapteur ou de ladite puce pour le/la placer dans un état dit activé, si l'adresse du biocapteur ou de la puce contenue dans un mot de commande reçu sur les plots d'interconnexions (23) est exacte, le substrat comportant également des moyens de liaisons électriques (100) permettant de connecter les plots d'interconnexions (23) et la pluralité d'électrodes (21) de chaque biocapteur ou de chaque puce vers des moyens d'adressage permettant l'activation des biocapteurs ou des puces et la polarisation des électrodes,
b) adressage des biocapteurs ou des puces et des électrodes sur lesquelles le dépôt d'une première matière doit être réalisé, appelées électrodes à greffer comprenant :
- l'envoi successif sur les plots d'interconnexions (23) des biocapteurs ou des puces (20) de mots de commande appropriés contenant l'adresse des biocapteurs ou des puces comprenant les électrodes à greffer pour activer successivement les biocapteurs ou les puces concernés, la reconnaissance par lesdits biocapteurs ou lesdites puces concernés des mots de commande appropriés déterminant leur placement à l'état activé, chaque biocapteur ou chaque puce activé demeurant actif pendant l'activation d'autres biocapteurs ou d'autres puces;
- puis, la connexion des électrodes à greffer sur tous les biocapteurs ou sur toutes les puces activés à des moyens de polarisation par adressage de ces électrodes,
c) le dépôt de ladite première matière simultanément sur les électrodes concernées par électrodéposition,
d) le renouvellement des étapes b) et c) autant de fois que nécessaire pour effectuer des dépôts de matière sur les autres électrodes.

2. Procédé selon la revendication 1, **caractérisé en ce que** les moyens de liaisons électriques du substrat permettant de connecter les plots d'interconnexions (23) comprennent des répéteurs (110).

3. Procédé selon l'une quelconque des revendications 1 ou 2, **caractérisé en ce que** la matière déposée est constituée d'espèces chimiques, biochimiques ou biologiques.

## Claims

1. A method for selective deposition of material on electrodes (21) of biosensors or chips (20) made from a same substrate (1), comprising the steps:
a) making on said substrate (1), a plurality of biosensors or chips (20, 30, 40, 50, 60, 70), each biosensor or each chip comprising a plurality of electrodes (21) on which selected deposits of material have to be made, pads of interconnections (23), an address area (22) containing the programmed address of the biosensor or of the chip, connected to the pads of interconnections and capable of recognizing the address of said biosensor or said chip for placing it in a so-called activated state, if the address of the biosensor or of the chip contained in a command word received on the pads of interconnections (23) is correct, the substrate also including electric connection means (100) allowing connection of the interconnection pads (23) and of the plurality of electrodes (21) of each biosensor or of each chip to addressing means allowing activation of the biosensors or of the chips and biasing of the electrodes,
b) addressing the biosensors or the chips and the electrodes on which the deposition of a first material has to be accomplished, called electrodes to be grafted, comprising:
- successively sending onto the pads of interconnections (23) of the biosensors or of the chips (20), suitable command words containing the address of the biosensors or of the chips comprising the electrodes to be grafted in order to successively activate the relevant biosensors or the relevant chips, the recognition by said relevant biosensors or relevant chips of the suitable command words, determining their placement in the activated state, each activated biosensor or chip remaining active during the activation of other biosensors or of other chips,
- and then connecting the electrodes to be grafted on all the activated biosensors or on all the activated chips to biasing means by addressing these electrodes,
c) simultaneously depositing said first material on the relevant electrodes by electrodeposition,
d) renewing steps b) and c) as many times as necessary for carrying out depositions of material on the other electrodes.

2. The method according to claim 1, **characterized in that** the electric connection means of the substrate allowing connection of the pads of interconnections (23) comprise repeaters (110).

3. The method according to any of claims 1 or 2, **characterized in that** the deposited material 1 consists of chemical, biochemical or biological species.

## Patentansprüche

1. Verfahren zur selektiven Materialabscheidung auf Elektroden (21) von Bio-Messfühlern oder Chips (20), die ausgehend von ein und demselben Substrat hergestellt sind, das Verfahren umfassend die folgenden Schritte bzw. Stufen:
a) Herstellen auf dem genannten Substrat (1) einer Mehrzahl von Bio-Messfühlern oder Chips (20, 30, 40, 50, 60, 70), von welchen jeder jeweils umfasst eine Mehrzahl von Elektroden (21), auf welchen selektive Materialabscheidungen vorgenommen werden sollen, des weiteren Zwischenverbindungs- bzw. Durchschaltungs-Kontaktbereiche bzw. -Plots (23), eine die programmierte Adresse des Bio-Messfühlers oder Chips enthaltende Adressen-Zone (22), welche mit den Zwischenverbindungs-bzw. Durchschaltungs-Kontaktbereichen bzw. -Plots verbunden ist und die Adresse des jeweiligen Bio-Messfühlers oder des jeweiligen Chips zu erkennen vermag, um diesen in einen sogenannten aktivierten Zustand zu versetzen, wenn die in einem an den Zwischenverbindungs-bzw. Durchschalt-Kontaktbereichen (-Plots) (23) empfangenen Befehlswort enthaltene Adresse des Bio-Messfühlers oder Chips genau zutrifft, wobei das Substrat auch elektrische Verbindungsmittel (100) umfasst, welche die Zwischenverbindungs-bzw. Durchschalt-Kontaktbereiche (-Plots) (23) und die Mehrzahl von Elektroden (23) jedes Bio-Messfühlers oder Chips mit Adressierungsmitteln zu verbinden gestattet, welche die Aktivierung der Bio-Messfühler oder Chips und die Vorspannung der Elektroden gestatten,
b) Adressieren der Bio-Messfühler oder der Chips und der Elektroden, auf welchen ein erstes Material abgeschieden werden soll, und die als zu beaufschlagende Elektroden (Pfropfelektroden) bezeichnet werden, das Adressieren umfassend:
- aufeinander folgende Zuleitung an die Zwischenverbindungs - bzw. Durchschaltungs-Kontaktbereiche (-Plots) (23) der Bio-Messfühler oder der Chips (20) von geeigneten Befehlsworten, welche die Adresse der die zu beaufschlagenden Elektroden (Pfropfelektroden) aufweisenden Bio-Messfühler oder Chips enthalten, zur aufeinanderfolgenden Aktivierung der betreffenden Bio-Messfühler oder Chips, wobei die Erkennung der geeigneten Befehlsworte durch die betreffenden Bio-Messfühler oder Chips ihre Versetzung in den aktivierten Zustand bestimmen, wobei jeweils jeder aktivierte Bio-Messfühler oder jeder aktivierte Chip während der Aktivierung andrer Bio-Messfühler oder anderer Chips aktiv verbleibt;
- sodann Verbinden der zu beaufschlagenden Elektroden auf den sämtlichen aktivierten Bio-Messfühlern oder den sämtlichen aktivierten Chips mit Vorspannmitteln, durch Adressieren dieser Elektroden,
c) Abscheiden des genannten ersten Materials gleichzeitig auf den betreffenden Elektroden , mittels Elektroabscheidung,
d) Wiederholen der Stufen bzw. Schritte b) und c) so oft als erforderlich zur Erzielung der Materialabscheidungen an den anderen Elektroden.

2. Verfahren nach Anspruch 1, **dadurch gekennzeichnet, dass** die elektrischen Verbindungsmittel des Substrats, welche die Verbindung bzw. Durchschaltung der Zwischenverbindungs-Kontaktbereiche (-Plots) (23) gestatten, Repetierverstärker aufweisen.

3. Verfahren nach einem der Ansprüche 1 oder 2, **dadurch gekennzeichnet, dass** das abgeschiedene Material von chemischen, biochemischen oder biologischen Substanzen gebildet wird.
